# EUROPÄISCHE PATENTSCHRIFT

(11) **EP 2 363 210 B1**
(45) Veröffentlichungstag und Bekanntmachung des Hinweises auf die Patenterteilung: **10.08.2016**
(21) Anmeldenummer: 11001029.5
(22) Anmeldetag: 09.02.2011
(51) Int. Cl.: B05D 1/14, A47L 9/24, F16L 11/10, F16L 11/115, D02G 3/40, D04C 1/02

(54) **FLEXIBLER SCHLAUCH, INSBESONDERE STAUBSAUGERSCHLAUCH**
FLEXIBLE TUBE, IN PARTICULAR VACUUM CLEANER TUBE
TUYAU FLEXIBLE, NOTAMMENT TUYAU D'ASPIRATEUR

(30) Priorität: 03.03.2010 DE 102010010019
(43) Veröffentlichungstag der Anmeldung: 07.09.2011
(73) Patentinhaber: TRUPLAST KUNSTSTOFFTECHNIK GMBH, D-35428 Langgöns (DE)
(72) Erfinder: Linhart, Georg Peter, 61206 Wöllstadt (DE); Linhart, Christian, 35428 Langgöns (DE)
(74) Vertreter: Oppermann, Ewald

(56) Entgegenhaltungen:
- EP-A1- 0 339 965
- EP-A2- 1 656 873
- CH-A- 513 271
- DE-A1- 2 122 872
- DE-C1- 3 623 811
- JP-A- 2003 245 229
- US-A- 3 180 364

## Beschreibung

### TECHNISCHES GEBIET

Die Erfindung betrifft einen flexiblen Schlauch, insbesondere Staubsaugerschlauch, mit profilierter Außenumfangsfläche, welche durch eine Umflechtung aus monofilen oder multifilen Fäden, die aus einem thermoplastischen Kunststoff bestehen, unter Bildung einer geglätteten Außenumfangsfläche überdeckt ist, entsprechend dem Oberbegriff des Patentanspruchs 1.

### STAND DER TECHNIK

Standard-Staubsaugerschläuche weisen eine profilierte Oberfläche zum Beispiel in Form von alternierenden Wellenbergen und Wellentälern auf, die eingängig oder mehrgängig schraubenlinienförmig verlaufen oder ringförmig an einem blasgeformten Schlauch gebildet sind. Diese Profilierung führt im Saugbetrieb dazu, dass sich der Schlauch infolge der Wellentäler während des Gleitens über Möbel-, Tür-, Werkstück- und Karosseriekanten häufig verhakt, wodurch sich ein erhöhter Kraftaufwand für den Bediener im Saugbetrieb einstellt. Infolge starker Verhakungen kann es zudem zu ruckartigen Unterbrechungen des gleichmäßigen Bewegungsablaufs des Bedieners im Saugbetrieb kommen, was zu einer zusätzlichen Beeinträchtigung des Saugkomforts führt. Darüber hinaus bewirkt das häufige Verhaken an Kanten eine zunehmende Beschädigung sowohl der Schlauchaußenumfangsfläche als auch der Außenfläche des Reibpartners, zum Beispiel einer Möbelaußenfläche. Ein weiterer negativer Effekt, der durch das Verhaken an Kanten hervorgerufen wird, ist die dabei entstehende Geräuschentwicklung. Ebenfalls zur Geräuschbildung während des Saugbetriebs trägt das häufige Aufschlagen der harten Schlauchaußenumfangsfläche zum Beispiel auf dem Boden bei. Stand der Technik sind bereits mit Rundmonofilen, Flachmonofilen, gefachten Monofilen und Multifilamenten umflochtene Schläuche. Bei diesen bekannten Schläuchen überdeckt das Geflecht die Vertiefungen des Wellenprofils des Schlauches, wodurch der Schlauch eine geglättete Außenumfangsfläche aufweist. Dadurch liegt ein besseres Gleitverhalten im Vergleich zu den konventionellen Schläuchen vor. Es kommt nicht mehr zu den vielfachen Verhakungen des Schlauches, wodurch sich der Kraftaufwand im Saugbetrieb reduziert.

Die den Oberbegriff des Patentanspruchs 1 bildende Druckschrift EP 1 656 873 A2 offenbart einen Staubsaugerschlauch mit einer geflochtenen Schlauchhülle.

Aufgrund der Stützwirkung des Geflechts weisen umflochtene Schläuche im Vergleich zu den konventionellen Schläuchen die besseren mechanischen Eigenschaften auf. So tritt zum Beispiel ein Abknicken bei einem umflochtenen Schlauch später ein als bei einem konventionellen Schlauch. Ist der Schlauch nicht zu straff umflochten, ist er flexibler als ein konventioneller Schlauch, denn er lässt sich stärker krümmen und verdrehen bis er einknickt. Im Hinblick auf ein verbessertes Aussehen bieten umflochtene Schläuche im Vergleich zu konventionellen Schläuchen die Möglichkeit eines flexibleren äußeren Erscheinungsbildes. Trotz dieser Vorteile weist der mit einem Flachmonofil oder Multifilament umhüllte Schlauch weiterhin noch Nachteile auf. So liegt zwar ein besseres Gleitverhalten vor, jedoch bilden die Ränder der einzelnen Monofile kleine Kanten, die immer noch zu Beschädigungen der Oberflächen des Reibpartners führen können.

Damit die Biegefähigkeit des Schlauches durch das stützende Geflecht verbessert und nicht verschlechtert wird, ist es erforderlich, dass das Geflecht locker auf den Schlauch aufgebracht wird und nicht so straff wie möglich geflochten ist. Dadurch lässt sich das Geflecht während des Biegens des Schlauches so lange zusammenstauchen, bis die Ränder der parallel zueinander verlaufenden Fäden aneinanderstoßen. Erst dann wird eine signifikante Gegenkraft aufgebaut, die der Biegebewegung entgegenwirkt. Ist das Geflecht zu straff und eng geflochten, verfügt der umflochtene Schlauch nicht mehr über die gegenüber dem Standardschlauch wesentlich bessere Flexibilität, sondern kann sogar ein steiferes Verhalten aufweisen. Daher kann das Geflecht nicht zu straff und eng auf den Schlauch aufgebracht werden, wodurch aber im Geflecht Überdeckungslücken entstehen. Diese können Schmutzpartikeln die Möglichkeit bieten, sich am Geflecht zu verhaken oder sogar in den Bereich zwischen Schlauch und Geflecht einzudringen. Auch lässt sich die Geräuschbildung infolge der Gleitbewegung und beim Aufschlagen des Schlauches auf den Boden durch das Geflecht nur unwesentlich reduzieren.

Aus der Druckschrift JP 2003-245229 A ist ein Staubsauger bekannt, von dem verschiedene Bauteile, nämlich ein Gehäuse, hintere Räder, ein Verbindungsstück zum Saugschlauch, ein Handstück mit Griff, ausziehbare Saugrohre, eine Saugöffnung sowie ein Stromkabel zur Vermeidung von Kratzern elektrostatisch beflockt sind.

Die Druckschrift EP 0 339 965 A1 offenbart schließlich ein Verfahren zur Herstellung beflockter Garne.

### AUFGABENSTELLUNG

Der Erfindung liegt die Aufgabe zugrunde, einen flexiblen Schlauch, insbesondere einen Staubsaugerschlauch, der mit einer Umflechtung versehen ist, bereitzustellen, der unter Vermeidung der vorstehend aufgeführten Nachteile der bekannten umflochtenen Schläuche insbesondere die Eigenschaften aufweist, im Saugbetrieb leicht, ohne zu Verhaken, ruckfrei und ohne beschädigende Wirkungen und ohne wesentliche Geräuschentwicklung über Kanten zu gleiten, dabei hochflexibel ist und das Eindringen von Schmutzpartikeln zwischen Schlauch und Umflechtung verhindert.

### DARSTELLUNG DER ERFINDUNG

Die gestellte Aufgabe wird ausgehend von dem im Oberbegriff des Patentanspruchs 1 angegebenen flexiblen Schlauch erfindungsgemäß dadurch gelöst, dass die Umflechtung aus mit Kurzfasern aus thermoplastischem Kunststoff beflockten monofilen oder multifilen Fäden gebildet ist.

Vorteilhafte oder zweckmäßige Weiterbildungen des erfindungsgemäßen Schlauchs sind in den Unteransprüchen angegeben und werden nachfolgend ebenfalls näher beschrieben.

Der auf die erfindungsgemäße Weise umflochtene Schlauch hat ein auch optisch ansprechendes Aussehen mit einer samtartigen, textil wirkenden Außenumfangsfläche. Der Schlauch hat auf allen Reibpartner-Oberflächen und an Kanten ein sehr gutes Gleitverhalten und neigt nicht zum Verhaken, bei gleichzeitiger Verbesserung seiner mechanischen Gebrauchseigenschaften, wie verringerte Abknickneigung, verbessertes Biegewechselverhalten und erhöhte Zugfestigkeit. Der Schlauch wird durch die beflockten Fäden der Umflechtung dichter überdeckt, so dass die Gefahr des Eindringens von Schmutzpartikeln in den Bereich zwischen Schlauch und Umflechtung sehr verringert ist, wodurch das Anhaften von Fremdkörpern, z.B. Eisenspäne, welche Kratzer an Reibpartnern, z.B. einer Kraftfahrzeug-Karosseriefläche, verursachen könnten, vermieden ist. Der erfindungsgemäße Schlauch zeichnet sich durch hervorragende Geräuschdämmungseigenschaften aus, sowohl beim Gleiten über Kanten als auch beim Aufschlagen auf den Boden. Aber auch die Geräusche, die durch die Saugluftströmung im Schlauch selbst entstehen, werden gut gedämmt. Der erfindungsgemäße Schlauch mit seinem textilen Aussehen und entsprechend verbesserten haptischen Eigenschaften vermittelt nicht mehr den Eindruck eines Plastikprodukts.

Es hat sich gezeigt, dass die vorteilhaften Eigenschaften des erfindungsgemäßen Schlauchs im Wesentlichen auch dann erzielt werden, wenn die Umflechtung entsprechend Anspruch 2 aus einer Mischung aus beflockten und unbeflockten Fäden gebildet ist.

Vorzugsweise sind die beflockten Fäden entsprechend Anspruch 3 elektrostatisch beflockt. Allerdings führen andere Beflockungsverfahren, wie beispielsweise die elektrostatisch-pneumatische Beflockung ebenfalls zu guten Beflockungsergebnissen. Hierbei erfolgt die Beflockung mit Luftunterstützung, die eine größere Tiefenwirkung und damit eine dichtere Beflockung in Vertiefungen und Hinterschneidungen ermöglicht.

Die Zusammensetzung der elektrostatisch beflockten Fäden kann mit den gewünschten Wirkungen auf den flexiblen Schlauch etwa innerhalb der im Anspruch 4 angegebenen Bereiche variiert werden, nämlich bestehend aus 16 bis 27 % Multifilament aus Polyamid 6 mit 700 dtex, 14 bis 22 % Acrylklebstoff und 51 bis 69 % Beflockungs-Kurzfasern aus Polyamid 6.6 mit 1,9 bis 3,3 dtex und einer Länge zwischen 0,65 und 1,0 mm. Bei allen vorstehenden und auch nachfolgenden Prozentangaben handelt es sich um Gewichtsprozente. Drei Varianten der zur Umflechtung verwendeten elektrostatisch beflockten Fäden mit aus den im Anspruch 4 angegebenen Bereichen ausgewählten Bereichen sind Gegenstand der Ansprüche 5 bis 7.

Wenn der elektrostatisch beflockte Faden die im Anspruch 5 angegebene Zusammensetzung aufweist, d.h. aus 23 bis 27 % Multifilament aus Polyamid 6 mit 700 dtex, 18 bis 22 % Acrylklebstoff und 51 bis 59 % Beflockungs-Kurzfasern aus Polyamid 6.6 mit 1,9 dtex und einer Länge von 0,65 mm besteht, weist der damit umflochtene Schlauch eine sehr gute Abriebfestigkeit, bei einem samtenen optischen und haptischen Eindruck auf.

Auch ein Schlauch, der mit einem elektrostatisch beflockten Faden bestehend gemäß Anspruch 6 aus 16 bis 20 % Multifilament aus Polyamid 6 mit 700 dtex, 16 bis 20 % Acrylklebstoff und 60 bis 68 % Beflockungs-Kurzfasern aus Polyamid 6.6 mit 1,9 dtex und einer Länge von 0,95 mm umflochten ist, besitzt eine gute Abriebfestigkeit und vermittelt einen samtenen optischen und haptischen Eindruck.

Besitzt der zum Umflechten verwendete elektrostatisch beflockte Faden eine Zusammensetzung gemäß Anspruch 7, d.h. 17 bis 21 %

Multifilament aus Polyamid 6 mit 700 dtex, 14 bis 18 % Acrylklebstoff und 61 bis 69 % Beflockungs-Kurzfasern aus Polyamid 6.6 mit 3,3 dtex und einer Länge von 1,0 mm, so resultiert ein flexibler Schlauch mit hervorragender Abriebfestigkeit, der ebenfalls einen textilen optischen und haptischen Eindruck vermittelt.

Die Außendurchmesser der zum Umflechten verwendeten elektrostatisch beflockten Fäden können zwischen etwa 1,4 bis etwa 2,2 mm betragen und sind im Wesentlichen vom Durchmesser des zu umflechtenden Schlauchs und der Steigung des Geflechts, der sogenannten Schlaglänge, abhängig. Schlauchdurchmesser und Steigung bestimmen die rautenförmigen Deckungslücken zwischen den Fäden des Geflechts. Durch die Breite des Monofils bzw. Garns lässt sich die Spannung des Geflechts beeinflussen. Ist die Breite bzw. der Durchmesser groß gewählt, stoßen die Fäden aneinander und eine Relativbewegung der Fäden beim Flechten wird behindert. Dadurch können die Fäden nicht fest auf den Schlauch gezogen werden. Das Geflecht liegt dann locker auf dem Schlauch auf, was bei einer kleineren Monofilbreite bzw. einem kleineren Durchmesser nicht der Fall ist.

Für die Anbringung des Geflechts bestehen im Rahmen der Erfindung mehrere Möglichkeiten. So kann gemäß Anspruch 8 ein fertiges schlauchartiges Geflecht (Rundgeflecht) aus elektrostatisch beflockten Fäden auf den Schlauch axial aufgezogen werden.

Es kann aber auch entsprechend Anspruch 9 ein fertiges Flachgeflecht (Litze) aus elektrostatisch beflockten Fäden zu einem schlauchartigen Geflecht (Rundgeflecht) vernäht und axial auf den Schlauch aufgezogen oder umfänglich um den Schlauch gewickelt und vernäht werden.

Vorzugsweise ist aber gemäß Anspruch 10 die Umflechtung aus elektrostatisch beflockten Fäden direkt beim Flechtvorgang auf dem Schlauch als Flechtkern gebildet.

### KURZE BESCHREIBUNG DER ZEICHNUNGEN UND FOTOS

Weitere Einzelheiten der Erfindung werden nachfolgend anhand schematischer Zeichnungen und Fotos näher beschrieben. Die schematischen Zeichnungen stellen etwa 23 bis 25-fach vergrößerte Querschnitte durch beflockte multifile Fäden dar. Es zeigen:
- Fig. 1: eine fotografische Außenansicht eines kurzen Schlauchabschnitts, der mit einer Umflechtung nach dem Stand der Technik versehen ist,
- Fig. 2: eine fotografische Außenansicht eines Schlauchabschnitts, der mit einer Umflechtung aus einem elektrostatisch beflockten multifilen Faden versehen ist,
- Fig. 3: eine weitere fotografische Außenansicht eines Schlauchabschnitts, der mit einer Umflechtung aus einem anderen elektrostatisch beflockten multifilen Faden versehen ist,
- Fig. 4 bis 6: jeweils schematische Querschnitte durch zwei benachbarte elektrostatisch beflockte multifile Fäden aus der Umflechtung eines Staubsaugerschlauchs (nicht dargestellt), die aufgrund einer zunehmenden Biegung des flexiblen Schlauchs eine zunehmende Verringerung ihres gegenseitigen Abstands erfahren haben, wobei die Kurzfasern zunehmend tiefer ineinandergreifen, und
- Fig. 7: einen weiteren schematischen Querschnitt durch zwei benachbart elektrostatisch beflockte multi-file Fäden aus der Umflechtung eines Staubsaugerschlauchs, die sich etwa in der in Fig. 6 gezeigten Abstandslage befinden, wobei die Kurzfasern zusammengedrückt sind.

### DETAILLIERTE BESCHREIBUNG DER AUSFÜHRUNGSBEISPIELE

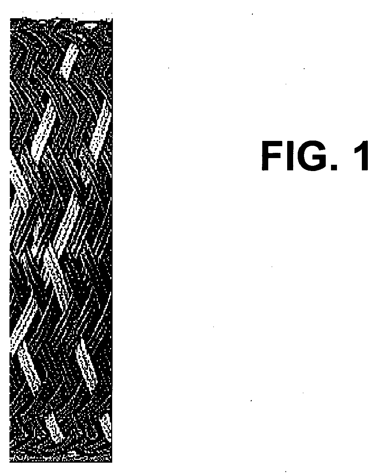

In Fig. 1 sind die durch das locker auf den Schlauch (nicht dargestellt) aufgebrachte Geflecht aus Flachmonofilen gebildeten Kanten und rautenförmige Überdeckungslücken beträchtlicher Größe deutlich zu erkennen.

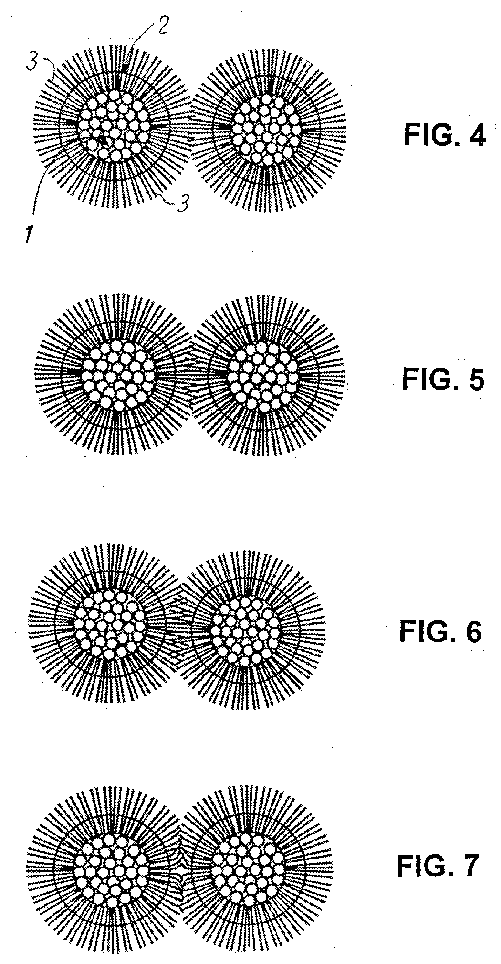

Die in den Fig. 4 bis 7 schematisch dargestellten beflockten Fäden, die entsprechend der Erfindung zum Umflechten von Schläuchen verwendet werden, besitzen im gezeigten Beispiel einen multifilen Kern 1, der von einer ringförmigen Schicht 2 aus Klebstoff umgeben ist, in welcher die Kurzfasern 3, auch Flocken genannt, mit mindestens einem Zehntel ihrer Länge in radialer Richtung verankert sind. Der multifile Kern 1 und die Klebstoffschicht 2 sind die steife Seele des beflockten Fadens, während die aus der Klebstoffschicht 2 vorstehenden Kurzfasern 4 eine elastische Randschicht des Fadens bilden.

Eine detaillierte Beschreibung des elektrostatischen Beflockungsverfahrens ist an dieser Stelle nicht erforderlich, weil das Verfahren Stand der Technik ist. Die kleinen leichten, die Elektrizität nicht leitenden Kurzfasern werden im statischen elektrischen Feld in Richtung der mit Klebstoff beschichteten Fäden bewegt. Die Bewegung der Kurzfasern beruht auf der Anziehung ungleichnamig geladener Körper. Beim elektrostatischen Beflocken wird mit Gleichstrom gearbeitet. Im Beflockungsgerät nehmen die Kurzfasern elektrische Ladung auf und sind bestrebt, diese Ladungseinheiten am entgegengesetzten Pol wieder abzugeben. Dieser Gegenpol wird durch den zu beflockenden Faden gebildet. Dabei "schießen" die Kurzfasern in Richtung des Gegenpols und ordnen sich dabei mit ihren Längsachsen parallel zu den Kraftlinien, wobei sie in die Klebstoffschicht eindringen und verankert werden. Tatsächlicher Gegenpol kann eine geerdete Metallform sein, über die der zu beflockende Faden gezogen wird. Der Klebstoffauftrag folgt kurz vor Eintritt des Fadens in das Beflockungsgerät.

Die Zusammensetzung der elektrostatisch beflockten Fäden kann innerhalb der angegebenen Bereiche variiert werden. Drei Varianten sind als Ausführungsbeispiele nachfolgend angegeben.

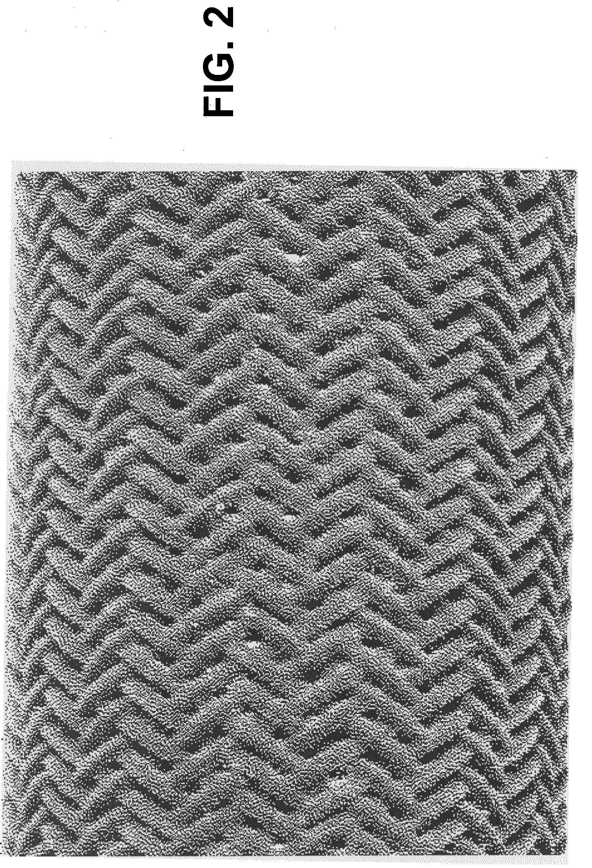

In einer ersten Variante besteht der flechtfertige Faden zu 25 % aus einem Multifilament aus Polyamid 6 mit 700 dtex, 20 % Acrylklebstoff und 55 % Kurzfasern aus Polyamid 6.6 mit 1.9 dtex und einer Länge von 0,65 mm. Der in Fig. 2 dargestellte Schlauch ist mit einem elektrostatisch beflockten Faden dieser ersten Variante umflochten. Der textile Charakter des Schlauches ist in Fig. 2 gut erkennbar. Die Überdeckungslücken sind kleiner als bei dem konventionell umflochtenen Schlauch gemäß Fig. 1.

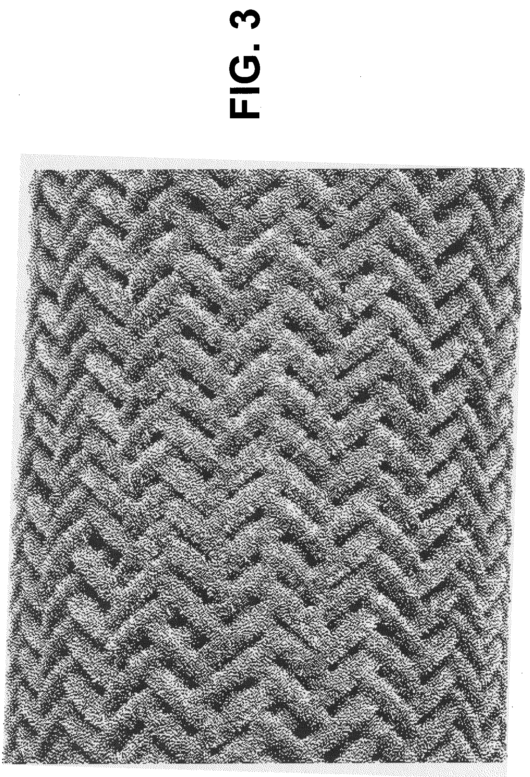

Bei einer zweiten Variante besteht der flechtfertige Faden zu 18 % aus einem Multifilament aus Polyamid 6 mit 700 dtex, 18 % Acrylklebstoff und 64 % Kurzfasern aus Polyamid 6.6 mit 1,9 dtex und einer Länge von 0,95 mm. Entsprechend einer dritten Variante besteht der flechtfertige Faden zu 19 % aus einem Multifilament aus Polyamid 6 mit 700 dtex, 16 % Acrylklebstoff und 65 % Kurzfasern aus Polyamid 6.6 mit 3,3 dtex und 1,0 mm Länge. Ein mit einem elektrostatisch beflockten multifilen Faden entsprechend der dritten Variante umflochtener Schlauch ist in Fig. 3 dargestellt. Erkennbar sind die Überdeckungslücken noch kleiner als bei der Umflechtung gemäß Fig. 2. Auch dieser Schlauch zeichnet sich durch eine textile Optik mit entsprechender Haptik aus.

Wie schon erwähnt kann die Umflechtung auf unterschiedliche Weise auf den Schlauch aufgebracht werden. Beim Aufziehen des Geflechts auf den Schlauch wird das Geflecht in einem ersten Verfahrensschritt auf einer Flechtmaschine hergestellt. Auf der Flechtmaschine sind ortsfeste drehbar gelagerte Spulenhalterscheiben konzentrisch um den Maschinenmittelpunkt angeordnet. Durch die Drehung der Spulenhalterscheiben werden die auf den Scheiben angebrachten mit dem Flechtgarn umwickelten Spulen (auch Klöppel genannt) von Spulenhalterscheibe zu Spulenhalterscheibe weitergegeben. Dadurch dass die eine Hälfte der Spulen sich nach rechts und die andere Hälfte nach links bewegt, überkreuzen sich die Bahnen der Spulen. Gleichzeitig werden die einzelnen Flechtgarne über dem Maschinenmittelpunkt nach oben abgezogen, so dass sie sich von den Spulen abwickeln. Durch diese parallel ablaufenden Vorgänge werden die Fäden über den Nachbarfaden gehoben und anschließend unter den nächsten Faden geführt, so dass sich am Flechtpunkt ein schlauchartiges Geflecht (Rundgeflecht) bildet. Das so erzeugte Rundgeflecht wird anschließend in einem zweiten Verfahrensschritt über den Schlauch gezogen und bildet die erwähnte textilartige Schutzhaut aus beflocktem Garn. Es ist auch möglich, dass anstelle eines Rundgeflechts ein Flachgeflecht, eine sogenannte Litze, erzeugt wird. Diese kann dann entweder zu einem Rundgeflecht vernäht und über den Schlauch gezogen werden, oder um den Schlauch gewickelt und dann vernäht werden.

Beim direkten Umflechten des Schlauches wird das Geflecht während des Flechtverfahrens auf den Schlauch aufgebracht. Der Aufbau und das Funktionsprinzip der Flechtanlage entspricht im Wesentlichen der soeben beschriebenen Erzeugung des Rundgeflechts. Der Unterschied besteht darin, dass sich im Maschinenmittelpunkt, um den die Spulenhalter konzentrisch angeordnet sind, eine Öffnung befindet, durch die der Schlauch nach oben geführt wird. Hierbei bildet der Schlauch selbst den sogenannten Flechtkern, auf dem sich das Geflecht bildet. Diese Verfahren sind an sich jeweils Stand der Technik, so dass nähere Erläuterungen dazu entbehrlich sind.

## Patentansprüche

1. Flexibler Schlauch, insbesondere Staubsaugerschlauch, mit profilierter Außenumfangsfläche, welche durch eine Umflechtung aus monofilen oder multifilen Fäden, die aus einem thermoplastischen Kunststoff bestehen, unter Bildung einer geglätteten Außenumfangsfläche überdeckt ist, **dadurch gekennzeichnet, dass** die Umflechtung aus mit Kurzfasern aus thermoplastischem Kunststoff beflockten monofilen oder multifilen Fäden gebildet ist.

2. Flexibler Schlauch nach Anspruch 1, **dadurch gekennzeichnet, dass** die Umflechtung aus einer Mischung aus beflockten und unbeflockten Fäden gebildet ist.

3. Flexibler Schlauch nach Anspurch 1 oder 2, **dadurch gekennzeichnet, dass** die beflockten Fäden elektrostatisch beflockt sind.

4. Flexibler Schlauch nach Anspruch 3, **gekennzeichnet durch** die nachstehende Zusammensetzung der elektrostatisch beflockten Fäden: 16 bis 27 % Multifilament aus Polyamid 6 mit 700 dtex, 14 bis 22 % Acrylklebstoff und 51 bis 69 % Beflockungs-Kurzfasern aus Polyamid 6.6 mit 1,9 bis 3,3 dtex und einer Länge zwischen 0,65 und 1,0 mm.

5. Flexibler Schlauch nach Anspruch 4, **gekennzeichnet durch** die nachstehende Zusammensetzung der elektrostatisch beflockten Fäden: 23 bis 27 % Multifilament aus Polyamid 6 mit 700 dtex, 18 bis 22 % Acrylklebstoff und 51 bis 59 % Beflockungs-Kurzfasern aus Polyamid 6.6 mit 1,9 dtex und einer Länge von 0,65 mm.

6. Flexibler Schlauch nach Anspruch 4, **gekennzeichnet durch** die nachstehende Zusammensetzung der elektrostatisch beflockten Fäden: 16 bis 20 % Multifilament aus Polyamid 6 mit 700 dtex, 16 bis 20 % Acrylklebstoff und 60 bis 68 % Beflockungs-Kurzfasern aus Polyamid 6.6 mit 1,9 dtex und einer Länge von 0,95 mm.

7. Flexibler Schlauch nach Anspruch 4, **gekennzeichnet durch** die nachstehende Zusammensetzung der elektrostatisch beflockten Fäden: 17 bis 21 % Multifilament aus Polyamid 6 mit 700 dtex, 14 bis 18 % Acrylklebstoff und 61 bis 69 % Beflockungs-Kurzfasern aus Polyamid 6.6 mit 3,3 dtex und einer Länge von 1,0 mm.

8. Flexibler Schlauch nach einem der vorangehenden Ansprüche 1 bis 7, **dadurch gekennzeichnet, dass** ein fertiges schlauchartiges Geflecht (Rundgeflecht) aus beflockten Fäden auf den Schlauch axial aufgezogen ist.

9. Flexibler Schlauch nach einem der vorangehenden Ansprüche 1 bis 7, **dadurch gekennzeichnet, dass** ein fertiges Flachgeflecht (Litze) aus beflockten Fäden zu einem schlauchartigen Geflecht (Rundgeflecht) vernäht und axial auf den Schlauch aufgezogen oder umfänglich um den Schlauch gewickelt und vernäht ist.

10. Flexibler Schlauch nach einem der vorangehenden Ansprüche 1 bis 7, **dadurch gekennzeichnet, dass** die Umflechtung aus beflockten Fäden direkt beim Flechtvorgang auf dem Schlauch als Flechtkern gebildet ist.

## Claims

1. Flexible hose, particularly vacuum cleaner hose, comprising a profiled outer circumferential surface covered by a braiding of monofilament or multifilament threads, which consist of a thermoplastic plastics material, with formation of a smoothed outer circumferential surface, **characterized in that** the braiding is formed from monofilament or multifilament threads flock-coated with short fibers of thermoplastic plastics material.

2. Flexible hose according to claim 1, **characterized in that** the braiding is formed from a mixture of flocked and unflocked threads.

3. Flexible hose according to claim 1 or 2, **characterized in that** the flocked threads are electrostatically flocked.

4. Flexible hose according to claim 3, **characterized by** the following composition of the electrostatically flocked threads: 16 to 27% multifilament of polyamide 6 with 700 dtex, 14 to 22% of acryl adhesive and 51 to 69% of flocking short fibers of polyamide 6.6 with 1.9 to 3.3 dtex and a length of between 0.65 and 1.0 mm.

5. Flexible hose according to claim 4, **characterized by** the following composition of the electrostatically flocked threads: 23 to 27% multifilament of polyamide 6 with 700 dtex, 18 to 22% of acryl adhesive and 51 to 59% of flocking short fibers of polyamide 6.6 with 1.9 dtex and a length of 0.65 mm.

6. Flexible hose according to claim 4, **characterized by** the following composition of the electrostatically flocked threads: 16 to 20% multifilament of polyamide 6 with 700 dtex, 16 to 20% of acryl adhesive and 60 to 68% of flocking short fibers of polyamide 6.6 with 1.9 dtex and a length of 0.95 mm.

7. Flexible hose according to claim 4, **characterized by** the following composition of the electrostatically flocked threads: 17 to 21% multifilament of polyamide 6 with 700 dtex, 14 to 18% of acryl adhesive and 61 to 69% flocking short fibers of polyamide 6.6 with 3.3 dtex and a length of 1.0 mm.

8. Flexible hose according to any one of the preceding claims 1 to 7, **characterized in that** a finished hose-like braid (round braid) of flocked threads is axially drawn onto the hose.

9. Flexible hose according to any one of the preceding claims 1 to 7, **characterized in that** a finished flat braid (strands) of flocked threads is seamed to form a hose-like braid (round braid) and axially drawn onto the hose or is wound circumferentially around the hose and seamed.

10. Flexible hose according to any one of the preceding claims 1 to 7, **characterized in that** the braiding of flocked threads is formed directly on the hose as braid core during the braiding process.

## Revendications

1. Tuyau flexible, notamment tuyau d'aspirateur, à surface périphérique extérieure profilée, qui est recouverte par une enveloppe tressée en fils monofilaires ou multifilaires, qui sont réalisés en une matière plastique thermoplastique, en formant ainsi une surface périphérique extérieure lissée, **caractérisé en ce que** l'enveloppe tressée est formée de fils monofilaires ou multifilaires floqués avec des fibres courtes en matière plastique thermoplastique.

2. Tuyau flexible selon la revendication 1, **caractérisé en ce que** l'enveloppe tressée est formée d'un mélange de fils floqués et non floqués.

3. Tuyau flexible selon la revendication 1 ou la revendication 2, **caractérisé en ce que** les fils floqués ont été floqués par voie électrostatique.

4. Tuyau flexible selon la revendication 3, **caractérisé par** la composition suivante des fils floqués par voie électrostatique : 16 à 27 % de multi-filaments en polyamide 6, de 700 dtex, 14 à 22 % de colle acrylique et 51 à 69 % de fibres courtes de flocage en polyamide 6.6, de 1,9 à 3,3 dtex et d'une longueur de 0,65 à 1,0 mm.

5. Tuyau flexible selon la revendication 4, **caractérisé par** la composition suivante des fils floqués par voie électrostatique : 23 à 27 % de multi-filaments en polyamide 6, de 700 dtex, 18 à 22 % de colle acrylique et 51 à 59 % de fibres courtes de flocage en polyamide 6.6, de 1,9 dtex et d'une longueur de 0,65 mm.

6. Tuyau flexible selon la revendication 4, **caractérisé par** la composition suivante des fils floqués par voie électrostatique : 16 à 20 % de multi-filaments en polyamide 6, de 700 dtex, 16 à 20 % de colle acrylique et 60 à 68 % de fibres courtes de flocage en polyamide 6.6, de 1,9 dtex et d'une longueur de 0,95 mm.

7. Tuyau flexible selon la revendication 4, **caractérisé par** la composition suivante des fils floqués par voie électrostatique : 17 à 21 % de multi-filaments en polyamide 6, de 700 dtex, 14 à 18 % de colle acrylique et 61 à 69 % de fibres courtes de flocage en polyamide 6.6, de 3,3 dtex et d'une longueur de 1,0 mm.

8. Tuyau flexible selon l'une des revendications précédentes 1 à 7, **caractérisé en ce qu'**une tresse finie en forme de boyau (tresse ronde) en fils floqués, est enfilée axialement sur le tuyau.

9. Tuyau flexible selon l'une des revendications précédentes 1 à 7, **caractérisé en ce qu'**une tresse finie plate (bande tressée) en fils floqués, est cousue en une tresse en forme de boyau (tresse ronde) et est enfilée axialement sur le tuyau, ou bien est enroulée sur la périphérie du tuyau et est cousue.

10. Tuyau flexible selon l'une des revendications précédentes 1 à 7, **caractérisé en ce que** l'enveloppe tressée en fils floqués est formée directement lors de l'opération de tressage sur le tuyau servant de noyau de tressage.
